# EUROPÄISCHE PATENTSCHRIFT

(11) **EP 1 322 402 B1**
(45) Veröffentlichungstag und Bekanntmachung des Hinweises auf die Patenterteilung: **22.12.2004**
(21) Anmeldenummer: 01980179.4
(22) Anmeldetag: 20.09.2001
(51) Int. Cl.: B01D 53/90, B01D 53/94, F01N 3/20

(54) **VERFAHREN UND VORRICHTUNG ZUR DOSIERUNG EINES REDUKTIONSMITTELS ZUR ENTFERNUNG VON STICKOXIDEN AUS ABGASEN**
METHOD AND DEVICE FOR DOSAGE OF A REDUCING AGENT FOR THE REMOVAL OF NITROGEN OXIDES FROM EXHAUST GASES
PROCEDE ET DISPOSITIF PERMETTANT LE DOSAGE D'UN AGENT REDUCTEUR SERVANT A ELIMINER DES OXYDES D'AZOTE DANS DES GAZ D'ECHAPPEMENT

(30) Priorität: 22.09.2000 DE 10047516
(43) Veröffentlichungstag der Anmeldung: 02.07.2003
(73) Patentinhaber: ROBERT BOSCH GMBH, 70442 Stuttgart (DE)
(72) Erfinder: HUBER, Sven, 83404 Ainring-Mitterfelden (DE); MAYER, Hanspeter, A-2753 Markt Piesting (AT); MUELLER, Gerhard, 83395 Freilassing (DE); OFFENHUBER, Michael, A-5421 Adnet (AT)
(86) Internationale Anmeldenummer: PCT/DE2001/003621
(87) Internationale Veröffentlichungsnummer: WO 2002/024311

(56) Entgegenhaltungen:
- EP-A- 0 849 443
- WO-A-00/79108
- WO-A-01/25600
- WO-A-01/25601

## Beschreibung

### Stand der Technik

Die Erfindung geht aus von einem Verfahren beziehungsweise einer Vorrichtung zur Dosierung eines Reduktionsmittels, insbesondere eines Harnstoffs bzw. einer Harnstoff-Wasser-Lösung im Rahmen einer katalytischen Abgasnachbehandlung, nach der Gattung der unabhängigen Ansprüche.

Um eine Verminderung von NO_{X}-Bestandteilen in Abgasen zu erzielen, wurden insbesondere für Dieselmotoren Reduktionskatalysatoren entwickelt, die üblicherweise in sogenannte SCR-Katalysatoren (engl. "Selective Catalytic Reduction") und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Aus der deutschen Patentanmeldung mit dem Aktenzeichen 199 46 900.8 (R. 36040) ist eine Einrichtung bekannt, welche zum Entfernen von Stickoxiden in Abgasen beispielsweise aus einem Dieselmotor Harnstoff als Reduktionsmittel zudosiert. Die Dosierung erfolgt über ein Ventil, das Harnstoffdosen freigibt, die über die elektrische Ansteuerung des Dosierventils, dessen Drosselquerschnitt und den am Drosselventil anliegenden Druckunterschied bestimmt werden. Die Dosiervorrichtung weist eine Rücklaufleitung zum Rücktransport überschüssigen Reduktionsmittels sowie ein Entlüftungsventil zur Beseitigung von Gasblasen aus Luft oder verdampftem Reduktionsmittel auf.

### Vorteile der Erfindung

Das erfindungsgemäße Verfahren beziehungsweise die erfindungsgemäße Dosiervorrichtung mit den kennzeichnenden Merkmalen der unabhängigen Ansprüche haben demgegenüber den Vorteil, ein einfaches Entlüften beziehungsweise einen kompakten, bauteilreduzierten Aufbau einer Dosiervorrichtung bereitzustellen. Es ist kein separates Entlüftungsventil mehr notwendig, auch die hierfür erforderlichen zusätzlichen Leitungen entfallen, so dass die Leitungsführung vereinfacht und entsprechend das in der Dosiervorrichtung für einen korrekten Betrieb zu beheizende Flüssigkeitsvolumen reduziert ist, was wiederum Energie und Kosten einspart. Darüber hinaus wird die Dosiergenauigkeit verbessert, da Druckabfälle in der Zuführungsleitung beispielsweise infolge von Lufteinschlüssen oder Einschlüssen verdampfter Harnstoff-Wasser-Lösung durch eine angepaßte Dosierung ausgeglichen werden können. Der Wegfall eines separaten Entlüftungsventils spart nicht nur Bauteilkosten beziehungsweise Zeit bei der Montage, sondern die Dosiervorrichtung insgesamt kann auf einem kleineren Gehäuseblock angeordnet werden.

Durch die in den abhängigen Ansprüchen aufgeführten Maßnahmen sind vorteilhafte Weiterbildungen und Verbesserungen der in den unabhängigen Ansprüchen angegebenen Verfahren beziehungsweise Dosiervorrichtung möglich. Besonders vorteilhaft ist es, eine elektrisch ansteuerbare Dosierpumpe, beispielsweise mit Schrittmotor, als Fördermittel vorzusehen, das eine bedarfsorientierte Förderung gewährleistet und bei dem lediglich mittels eines kurzen Bypasses, der den Ausgang der Dosierpumpe mit dem Saugeingang verbindet, bereits eine Rückführung zuviel geförderter Flüssigkeitsmengen sichergestellt werden kann, so daß eine separate Rücklaufleitung zum Harnstofftank entfallen kann. Das vereinfacht die Leitungsführung nochmals und reduziert entsprechend das in der Dosiervorrichtung für einen korrekten Betrieb zu beheizende Flüssigkeitsvolumen. Der Wegfall einer separaten Rücklaufleitung zum Harnstofftank spart nicht nur Bauteilkosten beziehungsweise Zeit bei der Montage, sondern die Dosiervorrichtung insgesamt kann auf einem kleineren Gehäuseblock angeordnet werden und ist einfacher am Fahrzeug montierbar, da nur noch eine einzige Anbindung an den Harnstofftank, die Zuleitung, herzustellen ist.

### Zeichnung

Ausführungsbeispiele der Erfindung sind in der Zeichnung dargestellt und in der nachfolgenden Beschreibung näher erläutert.

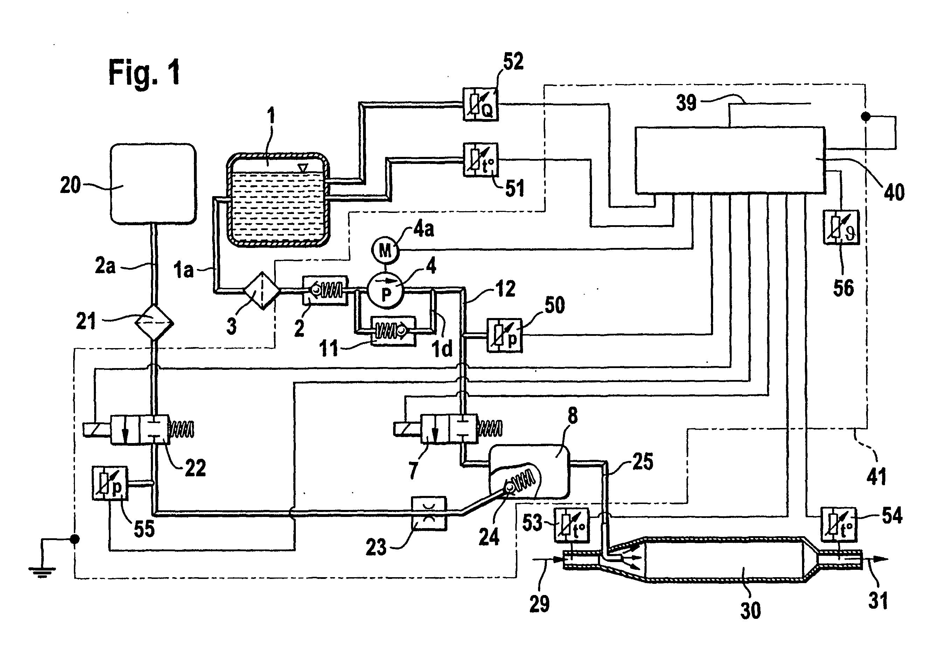

Fig. 1 zeigt eine mit einem Wassertank, einem Harnstofftank und einer Katalysatoranordnung zusammengeschaltete Dosiervorrichtung.

### Beschreibung der Ausführungsbeispiele

In Fig. 1 ist mit 1 ein Harnstofftank bezeichnet, aus welchem eine Harnstoff-Wasser-Lösung ("HWL") über eine Harnstoffleitung 1a zu einem als Filtersieb ausgeführten Filter 3 geführt wird. Das Filter 3 ist über eine Leitung 12 mit einem Rückschlagventil 2 verbunden, durch das hindurch die HWL von einer beispielsweise als Membranpumpe ausgeführten Förderpumpe 4 angesaugt und zu einem Dosierventil 7 einer Mischkammer 8 gefördert wird. Die Pumpe, 4 ist zur Minimierung der Überströmmenge über einen Steuermotor 4a drehzahlgesteuert. Eine geförderte Übermenge wird über ein Druckbegrenzungsventil 11 zur Saugseite der Pumpe zurückgeführt. Aus einem Druckluftbehälter 20 ist Druckluft über eine Druckluftleitung 2a mit einem Filtersieb 21, einem 2/2-Wegeventil 22, einer Drossel 23 und einem Rückschlagventil 24 in die Mischkammer einbringbar. Eine Aerosolleitung 25 führt von der Mischkammer 8 zum Katalysator 30, der auf der einen Seite eine Abgaszufuhr 29 und auf der gegenüberliegenden Seite einen Abgasauslaß 31 aufweist. Der Harnstofftank 1 ist mit einem Füllstandsensor 52 und einem Temperatursensor 51 versehen. Zwischen der Dosierpumpe 4 und dem Dosierventil 7 ist an der Leitung 12 ein Drucksensor 50 angeordnet. Temperatursensoren 53 und 54 messen die Temperatur des Abgases am Einlaß bzw. Auslaß des Katalysators 30. Ferner ist zwischen dem 2/2-Wegeventil 22 und der Drossel 23 ein Drucksensor 55 vorgesehen. Ein Temperatursensor 56 mißt die Temperatur eines metallischen Gehäuseblocks 41, auf dem die von der mit diesem Bezugszeichen versehenen strichmarkierten Linie umrandeten Komponenten angeordnet bzw. integriert sind. Auf dem Gehäuseblock 41 ist ferner ein Steuergerät 40 angebracht, das sowohl mit den Sensoren 50 bis 56 als auch mit dem Steuermotor 4a und dem Dosierventil 7 elektrisch verbunden ist. Der Gehäuseblock 41 ist geerdet, das Steuergerät 40 bezieht das elektrische Potential des Gehäuseblocks 41 als Referenzpotential. Über eine CAN-Datenleitung 39 (CAN ist eine Abkürzung für den englischen Ausdruck "Controlled Area Network") ist das Steuergerät 40 mit der Spannungsversorgung und weiteren elektronischen Komponenten im Kraftfahrzeug, insbesondere dem Motorsteuergerät, verbunden.

Das Dosierventil 7 dosiert die erforderliche Harnstoffwasserlösung in die Mischkammer 8 ein. In der Mischkammer wird unter Beaufschlagung der Harnstoffwasserlösung mittels der Druckluft ein Aerosol und ein Wandfilm erzeugt, welches bzw. welcher über die Aerosolleitung 25 in den Katalysator 30 eingebracht wird. Das Steuergerät 40 erfaßt hierzu Signale zu Motorbetriebsdaten, die von einem übergeordneten Motorsteuergerät über die CAN-Datenleitung 39 empfangen werden, sowie die Signale von Druck-, Temperatur- bzw. Füllstandsensoren 51 bis 56, welche an sich bekannt sind und hier nicht weiter erläutert werden. Darüber hinaus empfängt das Steuergerät 40 ein elektrisches Signal vom Drucksensor 50, aus dem sich der zeitabhängige Verlauf des Drucks in der Leitung 12 zwischen der Dosierpumpe 4 und dem Dosierventil 7 ergibt. Das Steuergerät 40 berechnet aus den Sensorinformationen eine Harnstoffdosiermenge, welche einem den Katalysator 30 durchströmenden Abgas zugegeben werden soll. Das Steuergerät 40 steuert nach Auswertung der Informationen unter Berücksichtigung der vom Sensor 50 erhaltenen Druck-Ist-Werte mit Hilfe des Dosierventils 7 und des Ventils 22 den Harnstoff-Wasser-Lösungsdruck bzw. den Druck in der Druckluftleitung. Das als Überströmventil wirkende Druckbegrenzungsventil 11 führt eine zuviel durch die Pumpe 4 geförderte Menge an Reduktionsmittel zur Saugseite der Pumpe zurück. Die Überstrommengen sind bei einer drehzahlgesteuerten Förderpumpe beziehungsweise einer Dosierpumpe in der Regel klein, da sie relativ gut bedarfsgerecht Flüssigkeiten fördern können, so daß nur kleine Toleranzen eventuell mittels des durch das Überströmventil gebildeten Bypasses ausgeglichen werden müssen. - Wenn der Druck im System beispielsweise durch Lufteinschlüsse abfällt, öffnet das Steuergerät das Dosierventil 7, so dass über dieses Ventil entlüftet werden kann. Erfolgt dieser Entlüftungsvorgang während des Katalysatorbetriebs, so wird aufgrund des zu geringen Systemdrucks eine zu geringe Flüssigkeitsmenge dosiert. Die Fehlmenge kann über im Steuergerät abgespeicherte Korrekturdaten durch eine entsprechende Ansteuerung des Dosierventils ausgeglichen werden. Wird also ein Druckabfall über den Drucksensor 50 registriert, kann das Steuergerät ein in ihm abgespeichertes Datenkennfeld abrufen, das beispielsweise jedem Wert einer Druckdifferenz zwischen Istwert und Sollwert des Drucks eine entsprechend verlängerte Öffnungszeit des Dosierventils zuordnet, um die Einspritzung einer korrekten Menge an Reduktionsmittel zu gewährleisten.

Alternativ kann die Dosiervorrichtung auch ohne Druckluftunterstützung verwendet werden, d.h. ohne Verwendung der Bauteile 20 bis 24. Der Drucksensor 50 kann auch durch einen Massenstromsensor ersetzt werden. Das in einem Speicher des Steuergeräts abgespeicherte Datenkennfeld muß dann natürlich an die veränderte Eingangsgröße (Masse eines definierten Volumens statt Druck) angepaßt werden, um auch bei Verwendung dieses alternativen Sensors Einspritzkorrekturen bei Druckabfällen durchzuführen. Die bei einem Massesensor gemessene Masse korreliert in jedem Falle mit dem in der Leitung herrschenden Druck, so daß auch mittels eines Massesensors Gaseinschlüsse und damit Druckabfälle erkannt werden. Das Druckbegrenzungsventil 11 kann auch so installiert sein, daß sein dem Ausgang der Pumpe 4 zugewandter Eingang direkt an der Leitung 12 angeordnet ist; dadurch kann das in Figur 1 abgebildete Leitungsstück zwischen dem Druckbegrenzungsventil 11 und der Leitung 12 entfallen.

## Patentansprüche

1. Verfahren zur Dosierung eines Reduktionsmittels, insbesondere eines Harnstoffs beziehungsweise einer Harnstoff-Wasser-Lösung, bei dem das Reduktionsmittel über eine Leitung (12) und ein die Dosierung regelndes Stellglied, insbesondere ein Dosierventil (7), einer Katalysatoranordnung (30) zur Entfernung von Stickoxiden aus den Abgasen insbesondere eines Dieselmotors zugeführt wird, **dadurch gekennzeichnet, dass** ein insbesondere durch Gaseinschlüsse bedingter Druckabfall in der Leitung (12) erkannt und die Leitung (12) über das Stellglied entlüftet wird.

2. Verfahren nach Anspruch 1, **dadurch gekennzeichnet, dass** das Stellglied die Dosierung zur Entlüftung in Abhängigkeit von der Höhe des Druckabfalls in der Leitung regelt.

3. Verfahren nach einem der vorhergehenden Ansprüche, **dadurch gekennzeichnet, dass** das Reduktionsmittel über eine elektrisch ansteuerbare (4a) Dosierpumpe (4), insbesondere eine drehzahlgesteuerte Pumpe, durch die Leitung (12) zum Stellglied gefördert wird.

4. Verfahren nach Anspruch 3, **dadurch gekennzeichnet, dass** zuviel geförderte Mengen an Reduktionsmittel vom Ausgang der Pumpe (4) direkt an den Eingang der Pumpe (4) zurückgeführt werden.

5. Verfahren nach einem der vorhergehenden Ansprüche, **dadurch gekennzeichnet, dass** aus dem dosierten Reduktionsmittel ein Aerosol gebildet und anschließend das Aerosol in die Katalysatoranordnung (30) eingeführt wird.

6. Verfahren nach Anspruch 5, **dadurch gekennzeichnet, dass** zur Bildung des Aerosols dem Reduktionsmittel Luft dosiert zugeführt wird.

7. Vorrichtung zur Dosierung eines Reduktionsmittels, insbesondere eines Harnstoffs beziehungsweise einer Harnstoff-Wasser-Lösung, mit Mitteln (2, 3, 4) zur Reduktionsmittelzufuhr in eine Katalysatoranordnung (30) zur Entfernung von Stickoxiden aus den Abgasen insbesondere eines Dieselmotors, wobei die Mittel über eine Leitung (12) mit einem die Dosierung regelnden Stellglied, insbesondere einem Dosierventil (7), verbunden sind, **dadurch gekennzeichnet, dass** ein Messelement (50) zur Messung des Drucks in der Leitung (12) oder einer mit dem Druck korrelierenden Meßgröße und ein Messdaten des Messelements (50) verwertendes Steuergerät (40) zur Ansteuerung des Stellglieds zur Entlüftung der Leitung (12) über das Stellglied vorgesehen sind.

8. Vorrichtung nach Anspruch 7, **dadurch gekennzeichnet, dass** die Mittel (40) einen Speicher, insbesondere einen PROM- oder einen EPROM-Speicher zur Abspeicherung eines Kenndatenfelds enthalten, so dass das Stellglied zur Entlüftung in Abhängigkeit von der Höhe des Druckabfalls in der Leitung angesteuert werden kann.

9. Vorrichtung nach einem der Ansprüche 7 oder 8, **dadurch gekennzeichnet, daß** die Mittel (2, 3, 4) eine elektrisch ansteuerbare (4a) Förder- oder Dosierpumpe (4), insbesondere eine drehzahlgesteuerte Pumpe, umfassen.

10. Vorrichtung nach Anspruch 9, **dadurch gekennzeichnet, daß** eine Rücklaufleitung (ld) mit einem Druckbegrenzungsventil (12) den Ausgang der Dosierpumpe (4) mit ihrem Eingang verbindet.

11. Vorrichtung nach einem der Ansprüche 7 bis 10, **dadurch gekennzeichnet, dass** die dosierte Reduktionsmittelzufuhr in eine Mischkammer (8) zur Bildung eines Aerosols erfolgt, so dass über eine Aerosolleitung (25) das Aerosol in die Katalysatoranordnung (30) eingeführt werden kann.

12. Vorrichtung nach Anspruch 11, **dadurch gekennzeichnet, dass** Mittel (20, 21, 22, 23, 24, 55) zur dosierten Luftzufuhr in die Mischkammer (8) vorgesehen sind.

## Claims

1. Method for metering a reducing agent, in particular a urea or a urea/water solution, in which the reducing agent is fed, via a line (12) and an actuator which controls the metering, in particular a metering valve (7), to a catalytic converter arrangement (30) for removing nitrogen oxides from the exhaust gases, in particular from a diesel engine, **characterized in that** a pressure drop in the line (12), caused in particular by gas inclusions, is recognized and the line (12) is vented via the actuator.

2. Method according to Claim 1, **characterized in that** the actuator controls the metering for venting purposes as a function of the level of the pressure drop in the line.

3. Method according to one of the preceding claims, **characterized in that** the reducing agent is conveyed to the actuator through the line (12) via an electrically actuable (4a) metering pump (4), in particular a speed-controlled pump.

4. Method according to Claim 3, **characterized in that** excessive quantities of reducing agent delivered are returned direct from the outlet of the pump (4) to the inlet of the pump (4).

5. Method according to one of the preceding claims, **Characterized in that** an aerosol is formed from the metered reducing agent, and then the aerosol is introduced into the catalytic converter arrangement (30).

6. Method according to Claim 5, **characterized in that** air is fed to the reducing agent in metered,quantities in order to form the aerosol.

7. Apparatus for metering a reducing agent, in particular a urea or urea/water solution, having means (2, 3, 4) for feeding reducing agent into a catalytic converter arrangement (30) for removing nitrogen oxides from the exhaust gases, in particular from a diesel engine, with the means being connected via a line (12) to an actuator which controls the metering, in particular a metering valve (7), **characterized in that** a measuring element (50) for measuring the pressure in the line (12) or a measurement variable which correlates to the pressure and a control unit (40), which evaluates measurement data from the measuring element (50) in order to actuate the actuator to vent the line (12) via the actuator, are provided.

8. Apparatus according to Claim 7, **characterized in that** the means (40) include a memory, in particular a PROM memory or an EPROM memory for storing a characteristic data diagram, so that the actuator for venting can be actuated as a function of the level of the pressure drop in the line.

9. Apparatus according to Claim 7 or 8, **characterized in that** the means (2, 3, 4) comprise an electrically actuable (4a) delivery or metering pump (4), in particular a speed-controlled pump.

10. Apparatus according to Claim 9, **characterized in that** a return line (1d) with a pressure-limiting valve (12) connects the outlet of the metering pump (4) to its inlet.

11. Apparatus according to one of Claims 7 to 10, **characterized in that** reducing agent is supplied in metered quantities into a mixing chamber (8) in order to form an aerosol, so that the aerosol can be introduced into the catalytic converter arrangement (30) via an aerosol line (25).

12. Apparatus according to Claim 11, **characterized in that** there are means (20, 21, 22, 23, 24, 55) for the metered supply of air into the mixing chamber (8).

## Revendications

1. Procédé permettant le dosage d'un agent réducteur, notamment l'urée ou une solution d'eau et d'urée, selon lequel une conduite (12) et un actionneur régulant le dosage, consistant notamment en une soupape de dosage (7), amènent l'agent réducteur à un dispositif de catalyseur (30) servant à éliminer des oxydes d'azote dans des gaz d'échappement issus particulièrement d'un moteur diesel,
**caractérisé en ce que**
dans la conduite (12) on identifie une chute de pression due notamment à des inclusions de gaz et la conduite (12) subit une purge par l'actionneur.

2. Procédé selon la revendication 1,
**caractérisé en ce que**
l'actionneur régule le dosage permettant la purge en fonction de l'importance de la chute de pression produite dans la conduite.

3. Procédé selon l'une des revendications précédentes,
**caractérisé en ce que**
l'agent réducteur est apporté à l'actionneur par la conduite (12) au moyen d'une pompe de dosage (4) commandable de manière électrique (4a), notamment une pompe commandée en fonction du régime.

4. Procédé selon la revendication 3,
**caractérisé en ce que**
le trop-plein d'agent réducteur apporté est directement remis en circuit depuis la sortie de la pompe (4) vers l'entrée de la pompe (4).

5. Procédé selon l'une des revendications précédentes,
**caractérisé en ce qu'**
on forme un aérosol de l'agent réducteur dosé, puis l'aérosol est introduit dans le dispositif de catalyseur (30).

6. Procédé selon la revendication 5,
**caractérisé en ce qu'**
un dosage d'air est apporté à l'agent réducteur afin de permettre la formation de l'aérosol.

7. Dispositif permettant le dosage d'un agent réducteur, notamment l'urée ou une solution d'eau et d'urée, comportant des moyens (2, 3, 4) pour apporter l'agent réducteur dans un dispositif de catalyseur (30) servant à éliminer des oxydes d'azote dans des gaz d'échappement issus particulièrement d'un moteur diesel, les moyens étant reliés par une conduite (12) à un actionneur régulant le dosage, consistant notamment en une soupape de dosage (7),
**caractérisé en ce qu'**
un élément de mesure (50) sert à mesurer la pression régnant dans la conduite (12) ou une valeur de mesure corrélée à la pression, et un appareil de commande (40) exploite les données de mesure de l'élément de mesure (50) servant à commander l'actionneur afin de purger la conduite (12) au moyen de l'actionneur.

8. Dispositif selon la revendication 7,
**caractérisé en ce que**
les moyens (40) comprennent une mémoire, notamment une mémoire PROM ou EPROM, servant à mémoriser un champ de caractéristiques de telle manière que l'actionneur servant à la purge puisse être commandé en fonction de l'importance de la chute de pression produite dans la conduite.

9. Dispositif selon l'une des revendications 7 ou 8,
**caractérisé en ce que**
les moyens (2, 3, 4) comprennent une pompe d'alimentation ou de dosage (4) commandable de manière électrique (4a), notamment une pompe commandée en fonction du régime.

10. Dispositif selon la revendication 9,
**caractérisé en ce qu'**
une conduite de retour (Id) comportant une soupape de limitation de pression (12) relie la sortie de la pompe de dosage (4) à son entrée.

11. Dispositif selon l'une des revendications 7 à 10,
**caractérisé en ce que**
l'apport d'agent réducteur dosé a lieu dans une chambre de mélange (8) pour former un aérosol, et l'aérosol peut être introduit dans le dispositif de catalyseur (30) par une conduite d'aérosol (25).

12. Dispositif selon la revendication 11,
**caractérisé en ce qu'**
des moyens (20, 21, 22, 23, 24, 55) servent au dosage de l'apport d'air dans la chambre de mélange (8).
